# EUROPÄISCHE PATENTSCHRIFT

(11) **EP 1 416 283 B1**
(45) Veröffentlichungstag und Bekanntmachung des Hinweises auf die Patenterteilung: **17.09.2014**
(21) Anmeldenummer: 03090346.2
(22) Anmeldetag: 15.10.2003
(51) Int. Cl.: G01P 1/08, G01D 7/00, G06F 11/16

(54) **Vorrichtung zur Geschwindigkeitsanzeige in Fahrzeugen**
Device for displaying vehicle speed
Dispositif d'affichage de la vitesse d'un véhicule

(30) Priorität: 04.11.2002 DE 10252124
(43) Veröffentlichungstag der Anmeldung: 06.05.2004
(73) Patentinhaber: Siemens Aktiengesellschaft, 80333 München (DE)
(72) Erfinder: Schaffrath, Niklas, 30161 Hannover (DE); Scheunemann, Reinhard, 38162 Cremlingen (DE)

(56) Entgegenhaltungen:
- EP-A- 0 645 711
- BE-A- 902 443
- DE-A- 4 306 470
- US-A- 4 247 852
- US-A- 4 541 066
- US-A- 5 136 516
- US-A- 5 487 303
- PARKMAN W T: "THE DRIVER'S DISPLAY ASSOCIATED WITH THE SPEED ADVISORY SYSTEM OF THE ADVANCED PASSENGER TRAIN" INTERNATIONAL CONFERENCE ON DISPLAYS FOR MAN-MACHINE SYSTEMS, XX, XX, 4. April 1977 (1977-04-04), Seiten 110-112, XP002059094
- FREDERICKSON T ET AL: "COMPARISON OF FAULT TOLERANT CONTROLLERS USED IN SAFETY APPLICATIONS" ISA TRANSACTIONS, INSTRUMENT SOCIETY OF AMERICA. PITTSBURGH, US, Bd. 30, Nr. 4, 1991, Seiten 97-106, XP000275597 ISSN: 0019-0578

## Beschreibung

Die Erfindung betrifft eine Vorrichtung zur Geschwindigkeitsanzeige in Fahrzeugen gemäß dem Oberbegriff des Anspruchs 1.

Bekannt sind elektromechanische Geschwindigkeitsanzeigen auf tachometrischer Basis. Bei diesen Anzeigegeräten erfolgt die Ansteuerung des Geschwindigkeitszeigers über einen Mikrokontroller. Um die korrekte Funktionsweise des elektromechanischen Tachos zu überprüfen, wird die Position des Zeigers über einen Winkelgeber zurückgelesen und mit dem geschwindigkeitsäquivalenten Eingangssignal des Tachos verglichen.

Bei Lokomotiven und Triebzügen wird der elektromechanische Tacho zunehmend durch elektronische Anzeigen, den sogenannten MMI (Man Machine Interface) ersetzt. Das MMI besteht dabei im Wesentlichen aus einem signaltechnisch nicht sicheren Standardcomputer (PC) und Graphikkarte mit angeschlossenem Display. Rückleseverfahren nach Art des oben geschilderten Geschwindigkeitsvergleichs zwischen angezeigtem und Eingangswert der Geschwindigkeit bei elektromechanischen Tachos gibt es bei den MMI nicht. Demgemäß ist die von dieser Konfiguration ausgehende Sicherheit gemäß CENELEC prEN 50129 mit SILO einzuschätzen. Das bedeutet, dass aus sicherungstechnischer Sicht nicht gewährleistet werden kann, dass die angezeigte Geschwindigkeit des MMI korrekt ist. Der Triebfahrzeugführer hat keine Möglichkeit, kleinere Abweichungen der angezeigten von der tatsächlichen Geschwindigkeit zu erkennen. Diese Unsicherheit ist für heutige und zukünftige Anwendungen, insbesondere im Hinblick auf das Europe train control system (ETCS) nicht hinnehmbar.

Aus der US 5,136,516 A ist eine Doppelanzeige der Geschwindigkeit bekannt. Dabei werden eine Digitalanzeige und eine Analoganzeige von einem gemeinsamen Signalverarbeitungskanal angesteuert. Die Digitalanzeige erhöht folglich nicht die Sicherheit bezüglich der Korrektheit der Analoganzeige.

Doppelkanalige Signalverarbeitung für die Ansteuerung einer Einzelanzeige ist aus der EP 0 645 711 A, aus Parkman W.T. "The Driver's Display Associated with the Speed Advisory System of the Advanced Passenger Train", International Conference on Displays for Man-Machine Systems, 1977-04-04, Seiten 110-112, XP002059094 und aus der DE 43 06 470 A bekannt.

Der Erfindung liegt die Aufgabe zugrunde, eine Vorrichtung der gattungsgemäßen Art anzugeben, bei der die Sicherheit bezüglich der Korrektheit der angezeigten Geschwindigkeit für den Triebfahrzeugführer erhöht ist.

Erfindungsgemäß wird die Aufgabe mit den kennzeichnenden Merkmalen des Anspruchs 1 gelöst. Durch die separate Anzeige eines Digitalwertes für die Geschwindigkeit, welcher mittels eines signaltechnisch sicheren Fahrzeuggerätes generiert wird, kann der Triebfahrzeugführer eine Abweichung zwischen der Analoganzeige des MMI und dem Digitalwert erkennen. Als sicheres Fahrzeuggerät kann beispielsweise das Siemens-Gerät zur Zugbeeinflussung ZUB 710 eingesetzt werden. Das ohnehin vorhandene signaltechnisch sichere Fahrzeuggerät ermöglicht die Verwendung einer signaltechnisch nicht sicheren Standard-Hardware für das MMI d. h., ein sicherer MMI-Rechner ist nicht erforderlich.

Die Rückleseeinrichtung ermöglicht die Erkennbarkeit von Signalverarbeitungsfehlern durch das Fahrzeuggerät. Auf diese Weise ist eine Anzeige mit einem CENELEC-Sicherheitswert gröβer SILO erreichbar. Die Rückleseeinrichtung basiert dabei auf einer Bildpixelauswertung der Digitalanzeige, wobei die in einen Kode umgesetzte Bildpixelstruktur mit dem Geschwindigkeits-Eingangssignal des Fahrzeuggerätes verglichen wird. Dazu ist das Fahrzeuggerät mit einem Registerspeicher ausgestattet, in dem für alle möglichen Geschwindigkeitswerte die entsprechenden Kodestrukturen bei der Projektierung eingespeichert worden sind. Der Vergleich erfolgt somit zwischen der aktuellen Bildpixelstruktur, d. h. der tatsächlich auf der Digitalanzeige visualisierten Geschwindigkeit mit dem anhand des Registerspeichers zugeordneten Eingangssignal des Fahrzeuggerätes.

Etwaige Abweichungen zwischen dem Eingangswert und dem digital angezeigten Geschwindigkeitswert können dem Triebfahrzeugführer optisch oder akustisch signalisiert werden. Auch eine Abweichung des digital angezeigten Wertes von dem analogen Zeigerwert auf dem Display des MMI kann mittels eines Winkelgebers, der die Zeigerstellung erfasst und einer Bildpixelauswertung, die den digitalen Geschwindigkeitswert erfasst, sowie entsprechenden Vergleichsmitteln optisch oder akustisch signalisiert werden. In letzterem Fall wird der Triebfahrzeugfahrer gewarnt, nicht mehr die bequeme Analoganzeige, sondern stattdessen die sicherheitstechnisch zuverlässigere Digitalanzeige zu beobachten.

Gemäß Anspruch 2 können die Eingangssignale für das MMI und für das Fahrzeuggerät aus derselben Datenquelle stammen und somit zunächst, d. h. vor der Umsetzung in eine analoge bzw. digitale Geschwindigkeitsanzeige identisch sein. Es ist jedoch auch möglich, für die beiden separaten Signalverarbeitungen unterschiedliche Geschwindigkeitssensoren zu verwenden. Die Digitalanzeige wird in jedem Fall zur Verifizierung der optisch besser erfassbaren Analoganzeige verwendet.

Um die optische Erfassbarkeit beider Geschwindigkeitsanzeigen weiter zu verbessern, kann die Digitalanzeige gemäß Anspruch 3 in das Display der Analoganzeige integriert sein. Die beiden Geschwindigkeitswerte dürfen von dem MMI jedoch nicht in das jeweils andere Daten- beziehungsweise Anzeigeformat überführt werden. Die Eingangssignale sind getrennt zu verarbeiten. Weicht die Anzeige des analogen Geschwindigkeitswertes von der des digitalen Geschwindigkeitswertes ab, so ist dies für den Triebfahrzeugführer ein eindeutiges Zeichen, dass er sich nicht länger auf die Anzeige verlassen darf.

Nachfolgend wird die Erfindung anhand einer figürlichen Darstellung näher erläutert.

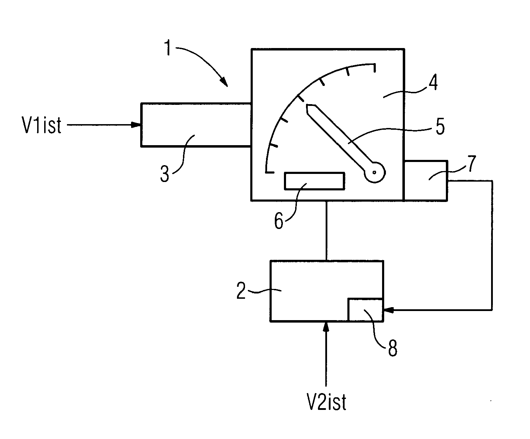

Die einzige Figur zeigt die wesentlichen Komponenten einer erfindungsgemäßen Vorrichtung zur Geschwindigkeitsanzeige in Schienenfahrzeugen.

Die Konfiguration besteht im Wesentlichen aus einem MMI (Man Machine Interface) 1 und einem signaltechnisch sicheren Fahrzeuggerät 2, wobei beiden Komponenten Eingangssignale V1ist und V2ist zur analogen bzw. digitalen Anzeige zugeführt sind. Die wichtigsten Bestandteile des MMI 1 sind ein signaltechnisch nicht sicherer Standardcomputer 3 und ein Display 4, das primär für die Analoganzeige der Geschwindigkeit mittels eines Zeigers 5 vorgesehen ist. An gut ablesbarer Stelle des Displays 4 ist eine Digitalanzeige 6 integriert, welche mit dem Fahrzeuggerät 2 verbunden ist. Durch die signaltechnisch nicht sicheren Eigenschaften des MMI ist die Analoganzeige der Geschwindigkeit ebenfalls nicht sicher. Das signaltechnisch sichere Fahrzeuggerät 2 erzeugt hingegen einen digitalen Anzeigewert, der eine höhere Sicherheit in Bezug auf die Korrektheit des angezeigten Geschwindigkeitswertes aufweist. Die Digitalanzeige 6 kann somit zur Überprüfung der optisch besser erfassbaren Analoganzeige dienen. Um die Zuverlässigkeit der Digitalanzeige 6 zusätzlich zu überprüfen, ist eine Rückleseeinrichtung mit Bildpixelauswertung 7 und Vergleich 8 der rückgelesenen Geschwindigkeit mit dem Einganswert V2ist vorgesehen. Die den ausgewerteten Bildpixeln der Digitalanzeige 6 entsprechende Geschwindigkeit wird dabei mit einem im Fahrzeuggerät 2 gespeicherten Bildpixelmuster verglichen, wobei jedes mögliche Bildpixelmuster mit einem Geschwindigkeitswert V2ist übereinstimmt. Die nach CENELEC-Norm geforderte Sicherheit dahingehend, dass eine angezeigte Geschwindigkeit tatsächlich mit der gemessenen Geschwindigkeit bzw. mit den Eingangssignalen, übereinstimmt, die dieser Geschwindigkeit entsprechen, ist durch das signaltechnisch sichere Fahrzeuggerät 2 und die zusätzliche Rückleseeinrichtung realisiert.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen. Insbesondere können die Eingangssignale für die Analoganzeige und die Digitalanzeige der Geschwindigkeit von ein und derselben Geschwindigkeitsmesseinrichtung stammen, so dass V1ist und V2ist identisch sind.

## Patentansprüche

1. Vorrichtung zur Geschwindigkeitsanzeige in Fahrzeugen, insbesondere Schienenfahrzeugen, mit einem einen Standardcomputer (3) und ein Display (4) aufweisenden, signaltechnisch nicht sicheren Man Machine Interface MMI (1), dem ein erstes Geschwindigkeitssignal (V1ist) zur analogen Geschwindigkeitsanzeige auf dem Display (4) zugeführt ist,
**dadurch gekennzeichnet,**
**dass** ein zweites Geschwindigkeitssignal (V2ist) einem signaltechnisch sicheren Fahrzeuggerät (2) zugeführt ist, welches mit einer digitalen Geschwindigkeitsanzeige (6) verbunden ist, dass eine Rückleseeinrichtung zum Vergleich des digitalen Anzeigewertes mit dem zweiten Geschwindigkeitssignal (V2ist) vorgesehen ist, wobei die Rückleseeinrichtung Mittel zur Bildpixelauswertung (7) der digitalen Geschwindigkeitsanzeige (6) und Vergleichsmittel (8) aufweist.

2. Vorrichtung nach Anspruch 1,
**dadurch gekennzeichnet,**
**dass** das erste und das zweite Geschwindigkeitssignal (V1ist und V2ist) von ein und derselben Geschwindigkeitsmesseinrichtung generiert sind.

3. Vorrichtung nach einem der vorangehenden Ansprüche,
**dadurch gekennzeichnet,**
**dass** die digitale Geschwindigkeitsanzeige (6) in das Display (4) integriert ist.

## Claims

1. Device for indicating the speed in vehicles, in particular rail vehicles, with a Man Machine Interface MMI (1) comprising insecure signal technology, said interface (1) having a standard computer (3) and a display (4), and to which a first speed signal (V1actual) for indicating the analogue speed on the display (4) is fed,
**characterised in that**
a second speed signal (V2actual) is fed to a piece of vehicle equipment (2) with secure signal technology, which speed signal (V2actual) is connected to a digital speed indicator (6),
and **in that** a read-back device is provided for comparing the digital display value with the second speed signal (V2actual), the read-back device having means for evaluating the image pixels (7) of the digital speed indicator (6) and comparison means (8).

2. Device according to claim 1,
**characterised in that**
the first and the second speed signal (V1actual and V2actual) are generated by one and the same speed measuring device.

3. Device according to one of the preceding claims,
**characterised in that**
the digital speed indicator (6) is integrated within the display (4).

## Revendications

1. Dispositif d'indication de vitesse dans des véhicules, notamment dans des véhicules ferroviaires, comprenant une interface MMI (1) homme machine, qui a un ordinateur (3) standard et un affichage (4) qui n'est pas sécurisé en technique du signal et à laquelle est envoyé, sur l'affichage (4), un premier signal (V1ist) de vitesse pour l'indication analogique de vitesse,
**caractérisé**
**en ce qu'**un deuxième signal (V2ist) de vitesse est envoyé à un appareil (2) du véhicule, qui est sécurisé en technique du signal et qui est relié à une indication (6) de vitesse numérique, en ce qu'il est prévu un dispositif de lecture en retour pour la comparaison de la valeur d'indication numérique au deuxième signal (V2ist) de vitesse, le dispositif de lecture en retour ayant des moyens d'exploitation (7) de pixels d'image de l'indication (6) de vitesse numérique et des moyens (8) de comparaison.

2. Dispositif suivant la revendication 1,
**caractérisé**
**en ce que** le premier et le deuxième signal (V1ist et V2ist) de vitesse sont produits par un seul et même dispositif de mesure de vitesse.

3. Dispositif suivant l'une des revendications précédentes,
**caractérisé**
**en ce que** l'indication (6) de vitesse numérique est intégrée dans l'affichage (4).
